# EUROPEAN PATENT SPECIFICATION

(11) **EP 0 584 995 B1**
(45) Date of publication and mention of the grant of the patent: **18.06.1997**
(21) Application number: 93306285.3
(22) Date of filing: 09.08.1993
(51) Int. Cl.: F28F 9/02

(54) **Heat exchanger**
Wärmetauscher
Echangeur de chaleur

(30) Priority: 28.08.1992 US 937501
(43) Date of publication of application: 02.03.1994
(73) Proprietor: VALEO ENGINE COOLING INCORPORATED, Jamestown, New York 14701 (US)
(72) Inventor: Case, Sigurd, Frewsburg, New York 14738 (US)
(74) Representative: Irons, Mark David

(56) References cited:
- EP-A- 0 198 581
- EP-A- 0 535 664
- US-A- 5 052 480

## Description

The present invention relates to header and tank constructions for use in a heat exchanger as defined in the preamble of claim 1.

Many types of heat exchangers in use today employ two spaced header and tank constructions. Generally parallel, open ended tubes interconnect the header and tank constructions and are in fluid communication with the interior of each. In many cases, plate or serpentine fins are disposed across the tubes between the header and tank constructions. Typical examples of such heat exchangers are vehicular radiators and condensers, although such heat exchangers may be found in many other applications as well.

Assembly of heat exchangers by the insertion of openended tubes into holes in opposing header portions of header and tank constructions has posed difficulties in the past. The tubes are often made of materials which are relatively soft and, hence, the tubes can easily be damaged during insertion into the holes on the headers, especially on a mass production basis. Such damage can include the bending of the tube walls or end, which can either restrict or hinder fluid flow therethrough.

It is difficult to assemble the parts of the header and tank construction and it is difficult to precisely position the tubular elements and maintain the proper distance between them.

JP-A-2309196, which is considered to be the closest prior art, discloses a structure for a heat exchanger including a slotted member and a sleeving structure having portions which extend into the slots. The sleeving structure has a plurality of longitudinally spaced apart elongate slots for receiving tube members, a plurality of center portions disposed between each pair of slots and wall portions extending into the slots. The center portions have an apex portion and circumferential side portions which are substantially flat in the longitudinal direction of the structure, extending transversely from each apex portion.

US-A-5052480 discloses a header pipe for a heat exchanger comprising a tube member receiving surface and a base surface, said tube member receiving surface having a plurality of longitudinally spaced apart elongated slots for receiving tube members of said heat exchanger and a center portion disposed between each pair of slots, the center portions comprising a substantially flat circumferential portion.

The present invention is directed to overcoming one or more of the above problems.

According to a first aspect of the present invention a tubular header and tank structure for use in a heat exchanger comprising a tube member receiving surface and a base surface; said tube member receiving surface having a plurality of longitudinally spaced apart elongated slots for receiving tube members and center portions disposed between each pair of slots; each center portion having an apex portion and a pair of circumferential side portions which are substantially flat in the longitudinal direction of the structure extending transversely from each apex portion; and a pair of guide surfaces for facilitating the insertion of tube members into said slots extending longitudinally from center portions toward each adjacent slot, characterised by said apex portion being substantially planar.

In a preferred embodiment, a core assembly comprising tubular elements between which are placed spacers is inserted in elongated, spaced receiving slots in the separate header surfaces of the header and tank constructions.

The slots of one header of the assembly are aligned and face corresponding slots in the other header surface and the tubular elements extend between the header and tank constructions through the aligned slots of the separate header portions.

According to a second aspect of the present invention there is provided a method of making a tubular header for use in a heat exchanger comprising the steps of:-
a) providing a substantially tubular material suitable for use in a heat exchanger;
b) placing a punch die along an interior surface of the substantially tubular mater;
c) stamping elongated slots into the tubular material by use of a punch which forms the slots as well as center portions between the slots having a substantially planar apex portions; and
d) forming circumferential side portions which are substantially flat in the longitudinal direction extending transversely from each planar apex portion by pressing against the tubular material in the side portions between the elongated slots whereby said center portions comprise guide surfaces extending longitudinally and inwardly of the header from the apex and side portions to the adjacent slots.

The heat exchanger assembly may contain partitioned areas or chambers within the separate header and tank constructions. The partitions are formed by baffle plates within the header and tank construction which divide the header and tank construction into separate chambers.

The portions of the header surfaces bordering each of the elongated slots for the tubular elements and generally above the slots comprise center portions each of which have a chordal substantially flattened area running transversely along the header surface. The apex planar portion and the transverse side portion flats in conjunction with a camming surface integral with the side portions aid in creating a steep funnel effect for camming the tubular members into the header slots. The elongated slots between the center and side portions with flats are defined by the camming surface bordering each of the elongated slots. The presence of a steep entry provided by the camming surface is important for high speed assembly of many tubes at a time into the matching slots of the header constructions. The present invention prevents and/or minimizes damage to the tube walls and ends.

The apex planar portions also produce more uniformity of dimension of the fillets with the walls closer for better bonding and joint strength.

The header and tank construction of the present invention can also include bosses on the base surface of the header and tank construction opposite the apex planar portion of the center portions. The opposing boss helps the header to be grabbed and be held in the correct rotational and parallel position during perpendicular insertion of tubes and brackets.

In a further embodiment of the present invention, an inside flat is automatically created in the stamping operation. A punch die used in the stamping that holds the metal of the header construction against deformation is flat to resist the punch. This inside flat advantageously helps locate the baffles for high speed production.

The embodiment specifically described herein is an integral construction. However, the present invention also encompasses embodiments in which the header and tank construction is made from separate header and tank portions.

Embodiments of the invention are described, by way of example only, with reference to the following drawings in which:

Figure 1 shows a perspective view of an embodiment of the present invention in which the surface of the header has ribs with flattened portions and slots.

Figure 2 is a closer view of a portion of the embodiment of Fig. 1 to better show the head surface portions.

Figure 3 is a cross section plane view of the Fig. 1 embodiment.

Figure 4 is a cross-section of Fig. 3 through plane A-A.

Figure 5 is a top plan view of a portion of the embodiment shown in Fig. 2.

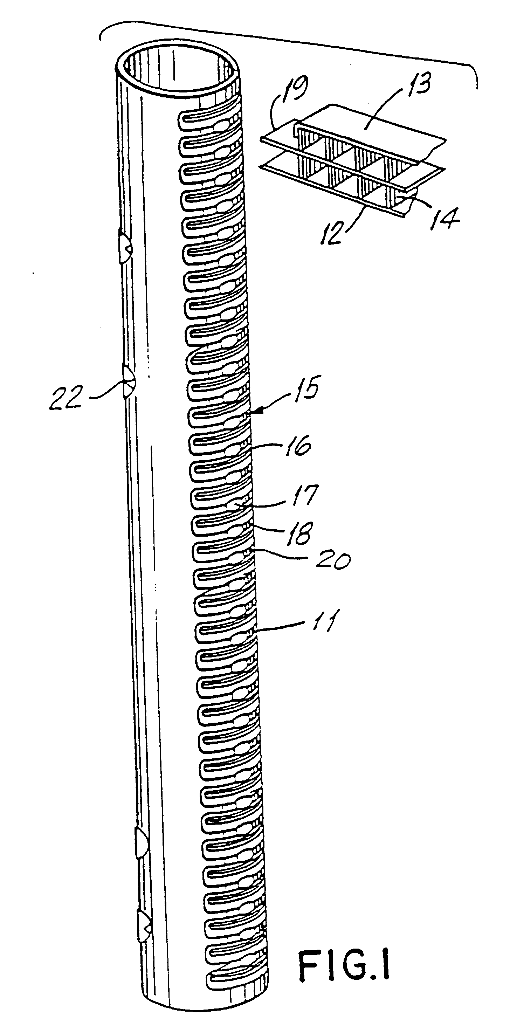

An exemplary embodiment of the present invention is shown in Fig. 1. This embodiment comprises a header portion 11 into which a multiplicity of tubes 12, which are separated by separators 14, per example serpentine fins, and if desired, having a side plates 13, can be inserted into slots 16 in the header surface portion or tube member receiving surface portion 15.

As can be seen in the figures, the header surface portion 15 is provided with a series of generally parallel elongated slots or holes 16 which receive the open ends 19 of tubular elements 12. The tubular elements 12 can be sealed within the slots or holes 16 by any suitable means as well as bonded thereto sufficiently so as to provide structural integrity especially at such pressures as the heat exchanger assembly will be employed. Bosses 22 assist in holding the header during the insertion of the open ends 19 of tubes 12 in slots 16 on header portion 11.

The portion of each header portion surface 15 between the elongated slots 16 comprise center portions 20 which are disposed generally above said elongated slots 16. At the apex of each center portion 20 is a generally-planar portion 17 referred to herein as an apex flat disposed opposite the bosses 22. A side portion flat 18 runs generally circumferentially from apex flat 17 in both directions from the apex thereof. A guide surface 23 extends longitudinally of the header portion from each center portion 20 and inwardly in the header portion surface 15. The presence of the apex flat 17 and the generally circumferential side portion flat 18 allow the guide surface to provide a steep funnel effect for guiding the tubes into the header slots. Adjacent center portions 20 and the guiding surfaces 23 define each of the elongated slots 16.

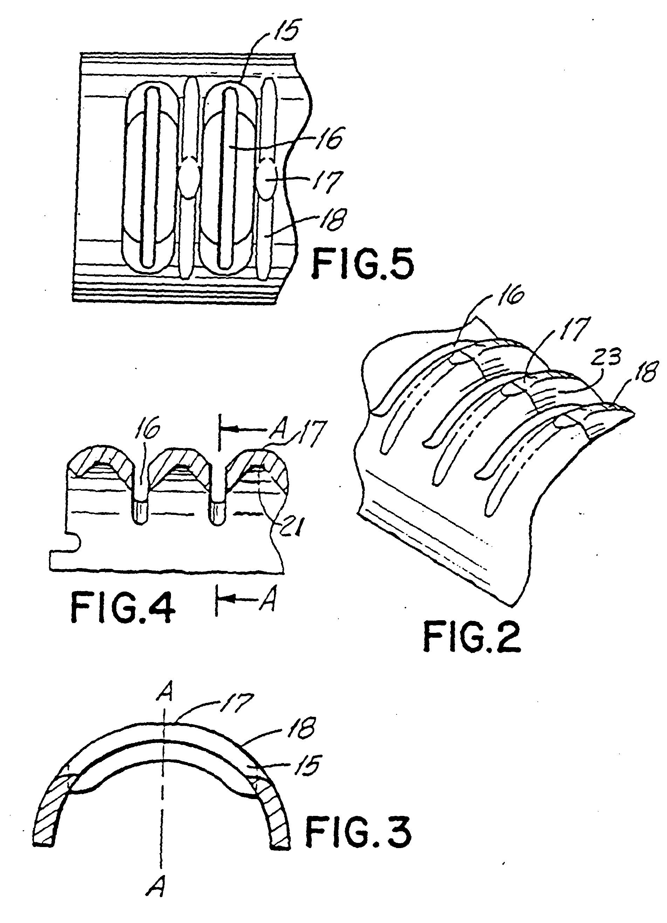

Figures 2, 3, 4 and 5 provide an enlarged view of a portion of header surface portion 15 to better illustrate the slot construction of the present invention. Fig. 2 is a perspective view of a portion of header surface portion 15 showing slots 16 and apex flats 17 and side portion flats 18. Figs. 3, 4 and 5 show the same features as seen in Fig. 2 and provide different views of the header portion slot structure. On the inside wall of the header portion, flat 21, corresponding to apex flat 17 and side portion flat 18, is formed during the stamping operation forming the present header and tank construction.

The header and tank construction of the present invention are made in a two-step procedure. The elongated slots and center portion flats are provided by a punching and stamping operation against a die in the interior of the header construction. In this step the elongated slots and center portions with apex flats are formed. The inside flat (21) opposite the apex flat also occurs because of the presence of the die. A flattened area inside the header portion between the slots is then formed as a result of the stamping operation. These flattened portions in the interslot areas increase the funnel effect and enhance the manufacturability of the heat exchangers.

## Claims

1. A tubular header and tank structure for use in a heat exchanger comprising:
a tube member receiving surface and a base surface;
said tube member receiving surface having a plurality of longitudinally spaced apart elongated slots (16) for receiving tube members and center portion (20) disposed between each pair of slots (16); each center portion (20) having an apex portion (17) and a pair of circumferential side portions (18) which are substantially flat in the longitudinal direction of the structure extending transversely from each apex portion; and a pair of guide surfaces (23) for facilitating the insertion of tube members into said slots extending longitudinally from center portions (20) toward each adjacent slot, characterised by said apex portion (17) being substantially planar.

2. A header and tank structure according to claim 1, further comprising at least one boss (22) on said base surface wherein said boss is located opposite said substantially planar apex portion (17).

3. A header and tank structure according to claim 1 or 2, further comprising a flat (21) on an inside of the wall defining said tube member receiving surface, corresponding to said substantially planar apex portion (17).

4. A method of making a tubular header for use in a heat exchanger comprising the steps of:
a) providing a substantially tubular material suitable for use in a heat exchanger;
b) placing a punch die along an interior surface of the substantially tubular mater;
c) stamping elongated slots (16) to the tubular material by use of a punch which forms the slots as well as center portions (20) between the slots having a substantially planar apex portions (17); and
d) forming circumferential side portions (18) which are substantially flat in the longitudinal direction extending transversely from each planar apex portion (17) by pressing against the tubular material in the side portions between the elongated slots (16) whereby said center portions comprise guide surfaces extending longitudinally and inwardly of the header from the apex and side portions to the adjacent slots (16).

## Patentansprüche

1. Röhrenförmige Verteilerteil- und Behältervorrichtung zur Verwendung in einem Wärmetauscher, ausgestattet mit einer Röhrenkörper-Aufnahmefläche sowie einer Grundfläche, wobei die Röhrenkörper-Aufnahmefläche mehrere in Längsrichtung zueinander beabstandete, langgestreckte Schlitze (16) zur Aufnahme von Röhrenkörpern sowie jeweils zwischen einem Paar dieser Schlitze (16) angeordnete Mittelteile (20) aufweist und diese Mittelteile (20) jeweils über einen Scheitelteil (17) sowie ein Paar in der Umfangsrichtung verlaufende Seitenteile (18) verfügen, die in der sich quer von jedem Scheitelteil erstreckenden Längsrichtung der Vorrichtung im wesentlichen flach geformt sind, sowie ferner ausgestattet mit einem Paar Führungsflächen (23), die das Einführen von Röhrenkörpern in die genannten Schlitze erleichtern und in Längsrichtung von den Mittelteilen (20) in Richtung auf den jeweils angrenzenden Schlitz verlaufen, **dadurch gekennzeichnet, daβ** der Scheitelteil (17) im wesentlichen ebenflächig ist.

2. Verteilerteil- und Behältervorrichtung gemäß Anspruch 1, jedoch zusätzlich ausgestattet mit mindestens einer Erhebung (22) auf der Grundfläche, wobei diese Erhebung dem im wesentlichen ebenflächigen Scheitelteil (17) gegenüberliegt.

3. Verteilerteil- und Behältervorrichtung gemäß Anspruch 1, jedoch zusätzlich ausgestattet mit einer Abflachung (21) auf einer Innenseite der Wand, die die genannte Röhrenkörper-Aufnahmefläche bildet, wobei diese Abflachung dem im wesentlichen ebenflächigen Scheitelteil (17) entspricht.

4. Verfahren zur Herstellung eines röhrenförmigen Verteilerteils zur Verwendung in einem Wärmetauscher, wobei dieses Verfahren folgende Schritte umfasst:
a) Bereitstellung eines im wesentlichen röhrenförmigen Materials, das zur Verwendung in einem Wärmetauscher geeignet ist;
b) Aufsetzen eines Stanzwerkzeugs auf eine Innenfläche des im wesentlichen röhrenförmigen Materials;
c)Ausstanzen langgestreckter Schlitze (16) in das röhrenförmige Material unter Einsatz eines Stanzwerkzeuges, das nicht nur die Schlitze ausstanzt, sondern auch die zwischen diesen Schlitzen liegenden Mittelteile mit im wesentlichen ebenflächigen Scheitelteilen formt;
d) Ausbildung im Umfangsrichtung verlaufender Seitenteile (18), die in der sich quer von jedem Scheitelteil (17) erstreckenden Längsrichtung der Vorrichtung im wesentlichen flach geformt sind, indem auf die Seitenteile zwischen den langgestreckten Schlitzen (16) ein Druck ausgeübt wird, wobei diese Mittelteile Führungsflächen erhalten, die sich von den Scheitel- und Seitenteilen in Längsrichtung - in dem Verteilerteil einwärts gerichtet - bis zu den jeweils angrenzenden Schlitzen (16) erstrecken.

## Revendications

1. Structure à collecteur et réservoir tubulaires destinée à être utilisée dans un échangeur de chaleur, comprenant :
une surface réceptrice d'éléments tubulaires et une surface de base,
ladite surface réceptrice d'éléments tubulaires ayant une série de fentes allongées espacées longitudinalement (16) destinées à recevoir des éléments tubulaires, et des parties centrales (20) situées entre chaque paire de fentes (16), chaque partie centrale (20) ayant une partie sommitale (17) et deux parties latérales circonférentielles (18) qui sont sensiblement plates dans la direction longitudinale de la structure, s'étendant transversalement à partir de chaque partie sommitale, et deux surfaces de guidage (23) destinées à faciliter l'introduction d'éléments tubulaires dans lesdites fentes, s'étendant longitudinalement à partir des parties centrales (20) vers chaque fente voisine, caractérisée par le fait que la partie sommitale (17) est sensiblement plane.

2. Structure à collecteur et réservoir selon la revendication 1, comprenant en outre sur la surface de base au moins un renflement (22) situé en face de la partie sommitale sensiblement plane (17).

3. Structure à collecteur et réservoir selon l'une des revendications 1 et 2, comprenant en outre sur une face intérieure de la paroi formant la surface réceptrice d'éléments tubulaires un plat (21) qui correspond à ladite partie sommitale sensiblement plane (17).

4. Procédé de fabrication d'un collecteur tubulaire destiné à être utilisé dans un échangeur de chaleur, comprenant les étapes de :
a) fourniture d'une matière sensiblement tubulaire utilisable dans un échangeur de chaleur,
b) placement d'une matrice à poinçon le long d'une surface intérieure de cette matière sensiblement tubulaire,
c) estampage de fentes allongées (16) dans la matière tubulaire au moyen d'un poinçon qui forme les fentes ainsi que des parties centrales (20) entre ces fentes ayant une partie sommitale sensiblement plane (17), et
d) formation de parties latérales circonférentielles (18) sensiblement plates dans la direction longitudinale, s'étendant transversalement à partir de chaque partie sommitale plane (17), par pression sur la matière tubulaire dans les parties latérales entre les fentes allongées (16), pour que lesdites parties centrales comprennent des surfaces de guidage s'étendant longitudinalement et vers l'intérieur du collecteur, des parties sommitales et latérales aux fentes voisines (16).
